# EUROPÄISCHE PATENTSCHRIFT

(11) **EP 3 740 980 B1**
(45) Veröffentlichungstag und Bekanntmachung des Hinweises auf die Patenterteilung: **09.03.2022**
(21) Anmeldenummer: 19701298.2
(22) Anmeldetag: 10.01.2019
(51) Int. Cl.: H01M 4/04, H01M 4/58, H01M 4/66, H01M 4/80, H01M 10/39

(54) **VERFAHREN ZUR HERSTELLUNG VON FORMTEILEN AUS MIT POLYSULFID GETRÄNKTEM PORÖSEM MATERIAL**
PROCESS TO MANUFACTURE MOULDED PARTS FROM POROUS MATERIALS THAT ARE IMPREGNATED WITH POLYSULFIDE
PROCÉDÉ DE FABRICATION DE PIÈCES MOULÉES À PARTIR DE MATÉRIAU POREUX ÉTANT IMPRÉGNÉ AVEC DU POLYSULFURE

(30) Priorität: 16.01.2018 EP 18151853
(43) Veröffentlichungstag der Anmeldung: 25.11.2020
(73) Patentinhaber: BASF SE, 67056 Ludwigshafen am Rhein (DE)
(72) Erfinder: BAYER, Domnik, 67056 Ludwigshafen (DE); ZERPA UNDA, Jesus Enrique, 67056 Ludwigshafen (DE); JABCZYNSKI, Wolfgang, 67056 Ludwigshafen (DE); TER MAAT, Johan, 67056 Ludwigshafen (DE)
(86) Internationale Anmeldenummer: PCT/EP2019/050550
(87) Internationale Veröffentlichungsnummer: WO 2019/141580

(56) Entgegenhaltungen:
- EP-A1- 0 161 079
- DE-A1-102015 207 449
- FR-A1- 2 116 459

## Beschreibung

Die Erfindung betrifft ein Verfahren zur Herstellung von Formteilen aus mit Polysulfid getränktem porösem Material.

Derartige mit Polysulfid getränkte Formteile finden Verwendung zum Beispiel als Elektroden oder Elektrodenteile oder auch als Speicherelemente für Anodenmaterial bei der Herstellung von elektrochemischen Zellen, insbesondere von Natrium-Schwefel-Batterien.

Da die Speicherfähigkeit von Batterien von der enthaltenen Menge der eingesetzten Reaktanden abhängt, werden zur Vergrößerung der Speicherfähigkeit zusätzliche Vorratsbehälter eingesetzt. In Natrium-Schwefel-Batterien wird zur Entladung das flüssige Natrium einem Festelektrolyten zugeführt, der für Kationen durchlässig ist. Das flüssige Natrium dient gleichzeitig als Anode und bildet Kationen, die durch den kationenleitenden Festelektrolyten zur Kathode transportiert werden. An der Kathode wird der an die Kathode anströmende Schwefel zu Polysulfid reduziert, also mit den Natriumionen zu Natriumpolysulfid umgesetzt. Das entsprechende Natriumpolysulfid kann in einem weiteren Behälter gesammelt werden. Alternativ ist es auch möglich, das Natriumpolysulfid mit dem Schwefel gemeinsam im Behälter um den Kathodenraum zu sammeln. Aufgrund des Dichteunterschieds steigt der Schwefel auf und setzt sich das Natriumpolysulfid ab. Diese Dichtedifferenz kann auch dazu genutzt werden, eine Strömung entlang der Kathode zu bewirken. Ein entsprechendes Batteriedesign ist zum Beispiel in WO-A 2011/161072 oder auch in WO-A 2017/102697 beschrieben.

Problematisch bei der Herstellung der Natrium-Schwefel-Batterien ist in der Regel die Befüllung mit den eingesetzten Reaktanden. Um einen störungsfreien Betrieb der Batterie zu ermöglichen, ist es notwendig, das üblicherweise als Kathode eingesetzte poröse Material, das den Festelektrolyten umgibt, vollständig mit Schwefel zu tränken. Um einen gleichmäßigen Transport des Schwefels im üblichen Betrieb der Batterie zu gewährleisten, ist zusätzlich der die Elektrode umgebende Raum, der als Schwefelspeicher dient, ebenfalls mit einem porösen Material, üblicherweise einem Filz oder einem Vlies, gefüllt. In der Regel wird zur Befüllung der Batterie flüssiges Natrium in den Vorratsbehälter für Natrium eingefüllt und es werden mit Schwefel durchtränkte poröse Elektroden eingesetzt. Verfahren zur Herstellung der mit Schwefel getränkten porösen Elektrode sind zum Beispiel in JP-A 2004082461, KR-A1020130075495 oder KR-A 1020140085758 beschrieben.

Weiterer relevanter Stand der Technik ist aus den Dokumenten FR2116459A1, DE102015207449A1 und EP0161079A1 bekannt.

Problematisch beim Befüllen mit Alkalimetall und Schwefel ist insbesondere die Handhabung des hochreaktiven flüssigen Alkalimetalls, insbesondere Natriums. Um eine weniger gefährliche und problematische Befüllung der Batterie zu ermöglichen, ist es aus WO-A 2017/102697 bekannt, die poröse Elektrode und das poröse Material zur Speicherung des Schwefels mit Polysulfid zu tränken und die so getränte poröse Elektrode und das getränkte Speichermaterial in die elektrochemische Zelle einzusetzen. Ein Befüllen mit flüssigem Alkalimetall, insbesondere flüssigem Natrium ist dann nicht mehr erforderlich. Um die elektrochemische Zelle in einen betriebsbereiten Zustand zu versetzen, wird dann nach der Montage ein erster Ladezyklus durchgeführt, bei dem das Alkalimetallpolysulfid in Alkalimetall und Schwefel gespalten wird, wobei die Alkalimetallionen den Festelektrolyten durchdringen, an der Elektrode im Anodenraum durch Elektronenaufnahme neutralisiert werden und im Vorratsbehälter für Alkalimetall gesammelt und gespeichert werden.

Aufgrund der von Schwefel verschiedenen Eigenschaften des Alkalimetallpolysulfids, insbesondere der höheren Schmelztemperatur und der bei dieser Temperatur geringeren Viskosität lassen sich die für eine Schwefelschmelze genutzten Verfahren zum Tränken der porösen Materialien für die Elektrode und das Speichermaterial nicht für das Tränken mit dem Alkalimetallpolysulfid nutzen. Zudem ist aufgrund der möglichen Selbstentzündung der Alkalimetallpolysulfidschmelze bei der Herstellung der mit Polysulfid getränkten porösen Materialien ein Kontakt mit Sauerstoff zu verhindern, solange das Polysulfid in flüssiger Form vorliegt. Weiterhin ist Alkalimetallpolysulfid hygroskopisch, so dass der Kontakt des Akalimetallpolysulfids mit Wasser, auch dem in der Umgebungsluft als Luftfeuchtigkeit enthaltenen Wasser, möglichst gering zu halten ist. Zudem hat sich gezeigt, dass beim Befüllen mit hohem Druck die Struktur des porösen Materials durch das eindringende Polysulfid verändert oder sogar zerstört werden kann.

Aufgabe der vorliegenden Erfindung war es daher, ein Verfahren zur Herstellung von Formteilen aus mit Polysulfid getränktem porösem Material bereitzustellen, das sicher betrieben werden kann und bei dem die Struktur des porösen Materials nicht zerstört wird.

Gelöst wird die Aufgabe durch ein Verfahren zur Herstellung von Formteilen aus mit Polysulfid getränktem porösem Material, umfassend folgende Schritte:
(a) Einlegen des porösen Materials in ein Formwerkzeug;
(b) Einbringen von flüssigem Polysulfid in das Formwerkzeug mit einer Fließgeschwindigkeit im porösen Material im Bereich von 0,5 bis 200 cm/s;
(c) Abkühlen des Polysulfids auf eine Temperatur unterhalb der Schmelztemperatur des Polysulfids;
(d) Entnehmen des mit dem Polysulfid getränkten porösen Materials.

Überraschenderweise hat sich gezeigt, dass bei einer Fließgeschwindigkeit des Polysulfids im porösen Material im Bereich von 0,5 bis 200 cm/s, bevorzugt im Bereich von 0,5 bis 50 cm/s ein Durchtränken des porösen Materials erreicht wird, ohne dass die Struktur des porösen Materials so verändert wird, dass ein Betrieb der elektrochemischen Zelle ohne Leistungsverluste nicht mehr möglich ist. Eine solche Veränderung ergibt sich bei zu hoher Fließgeschwindigkeit zum Beispiel durch Verschieben von Fasern in einem Filz oder Vlies, das als poröses Material eingesetzt wird. Durch das Verschieben wird die Porengröße innerhalb des Filzes oder Vlieses verändert, was zu einer verminderten Kapillarwirkung führt, so dass im Entladebetrieb nicht mehr genug Polysulfid vom Festelektrolyten weggeführt wird und Schwefel zum Festelektrolyten geleitet wird und im Ladebetrieb nicht genügend Polysulfid zum Festelektrolyten und Schwefel vom Festelektrolyten weggeleitet wird. Für einen optimalen Betrieb der elektrochemischen Zelle ist es erforderlich, dass der Festelektrolyt im Idealfall beim Entladen immer vollständig mit Schwefel benetzt ist und das Polysulfid unmittelbar nach der Reaktion von Alkalimetall mit Schwefel vom Festelektrolyten weggeleitet wird und entsprechend beim Laden immer vollständig mit Polysulfid benetzt ist und der Schwefel unmittelbar nach der Spaltung des Polysulfids in Schwefel und Alkalimetall vom Festelektrolyten weggeleitet wird. Dieser Transport wird durch die Kapillarwirkung der Poren in der porösen Elektrode und eine entsprechende Benetzbarkeit des porösen Materials mit Polysulfid beziehungsweise Schwefel unterstützt.

Als "Polysulfid" im Rahmen der vorliegenden Erfindung wird das Reaktionsprodukt X_{y}Sₙ aus Anodenmaterial X, üblicherweise einem Alkalimetall, insbesondere Natrium, und Schwefel bezeichnet. n ist eine Zahl zwischen 1 und 5,2 und gibt die mittlere Länge der im Polysulfid enthaltenen Schwefelketten an, wobei das Polysulfid häufig eine Mischung aus Polysulfiden mit jeweils verschiedener Anzahl an Schwefelatomen je Molekül ist und y ist eine ganze Zahl, die so gewählt ist, dass das Reaktionsprodukt aus Anodenmaterial und Schwefel elektrisch neutral ist. Da die Schwefelketten immer zweifach negativ geladen sind, ist zum Beispiel y=2 bei einem Alkalimetall als Anodenmaterial X.

Zur Herstellung des mit Polysulfid getränkten porösen Materials wird im ersten Schritt (a) das poröse Material in das Formwerkzeug eingelegt. Das Formwerkzeug ist dabei ein übliches Formwerkzeug, wie es in Spritzverfahren oder Gießverfahren eingesetzt wird und eine innere Oberflächenkontur aufweist, die der äußeren Form des herzustellenden Formteils entspricht. Aufgrund der stark korrosiven Eigenschaften des Polysulfids sind alle Oberflächen des Formwerkzeugs, die mit Polysulfid in Kontakt kommen aus einem gegenüber dem Polysulfid inerten Material. Hierzu ist es möglich, die Oberflächen des Formwerkzeugs zu beschichten oder alternativ das Formwerkzeug aus einem gegenüber dem Polysulfid inerten und gegenüber den auftretenden Temperaturen stabilen Material zu fertigen. Geeignete Materialien für eine Beschichtung oder zur Herstellung des Formwerkzeugs sind zum Beispiel Chrom, Glas oder Keramiken. So ist es zum Beispiel möglich, das Formwerkzeug aus Gusseisen oder Stahl, beispielsweise Edelstahl oder gehärtetem Werkzeugstahl, zu fertigen und mit einer Chrombeschichtung zu versehen. Die Chrombeschichtung wird dabei vorzugsweise elektrochemisch, das heißt in einem Galvanisierverfahren aufgebracht. Wenn Glas oder Keramik als Material für das Formwerkzeug eingesetzt wird, so wird dieses Vorzugsweise vollständig aus diesen Materialien gefertigt. Alternativ ist es auch möglich, eine dünne Keramikbeschichtung, beispielsweise durch ein Gasphasenauftragsverfahren, beispielsweise CVD, aufzubringen. Zur besseren Entformung der hergestellten Teile ist es vorteilhaft, wenn die Oberflächen, die die Kontur des Formteils bilden, poliert sind.

Nach dem Einlegen des porösen Materials wird das Formwerkzeug geschlossen. Um bei Einsatz des mit Polysulfid getränkten porösen Materials in einer elektrochemischen Zelle die spätere Montage der elektrochemischen Zelle zu erleichtern, wird die Innenkontur des Formwerkzeugs so gestaltet, dass das im Formwerkzeug hergestellte mit Polysulfid getränkte poröse Material Abmessungen aufweist, die ein leichtes Einsetzen in die elektrochemische Zelle erlauben.

Das heißt, dass die Außenflächen des hergestellten mit Polysulfid getränkten porösen Materials jeweils einen kleinen Abstand zu Flächen aufweisen, gegen die das getränkte poröse Material im montierten Zustand der elektrochemischen Zelle anliegt. Damit im Betrieb der elektrochemischen Zelle das poröse Material an den jeweiligen Außenflächen anliegt, ist es weiterhin bevorzugt, wenn das poröse Material im Formwerkzeug etwas komprimiert wird. Nach Einbau in der elektrochemischen Zelle und Schmelzen des Polysulfids dehnt sich dann das poröse Material wieder aus und legt sich an die jeweiligen Außenflächen der elektrochemischen Zelle an. Die Form des hergestellten mit Polysulfid getränkten porösen Materials und die Kompression des porösen Materials beim Einlegen in das Formwerkzeug werden dabei so gewählt, dass nach dem Entspannen in der elektrochemischen Zelle sichergestellt wird, dass das poröse Material an allen Anlageflächen in der elektrochemischen Zelle anliegt. Dies bedeutet, dass das poröse Material vorzugsweise auch nach der Rückverformung in der elektrochemischen Zelle noch leicht komprimiert ist.

Abhängig vom Einsatz des porösen Materials in der elektrochemischen Zelle, wird das poröse Material im Formwerkzeug auf ein Volumen komprimiert, das 0 bis 50 %, bevorzugt 5 bis 40 % und insbesondere 5 bis 30 % kleiner ist als das Volumen des nicht komprimierten porösen Materials. Wenn das poröse Material als Elektrodenteil eingesetzt wird, wird das poröse Material im Formwerkzeug vorzugsweise auf ein Volumen komprimiert, das 5 bis 50 %, mehr bevorzugt 10 bis 40 % und insbesondere 20 bis 30% kleiner ist als das Volumen des nicht komprimierten porösen Materials. Wenn das poröse Material für Speicherteile eingesetzt wird, ist eine Kompression nicht so maßgeblich, so dass in diesem Fall das poröse Material vorzugsweise auf ein Volumen komprimiert wird, das 0 bis 30 %, mehr bevorzugt 5 bis 20 % und insbesondere 5 bis 15 % kleiner ist als das Volumen des nicht komprimierten porösen Materials.

Da geschmolzene Polysulfide in Gegenwart von Sauerstoff zur Selbstentzündung neigen, ist es vorteilhaft, das Formwerkzeug nach dem Einlegen des porösen Materials und dem Schließen mit einem Inertgas zu spülen. Als Inertgas kann dabei jedes Gas eingesetzt werden, das nicht mit dem Polysulfid reagiert. Geeignete Inertgase sind insbesondere Stickstoff, Kohlendioxid oder Edelgase. Besonders bevorzugt als Inertgas ist Stickstoff. Durch das Spülen mit dem Inertgas wird das zuvor im Formwerkzeug enthaltene Gas, im Allgemeinen Luft, entfernt. Hierdurch wird somit auch der im Formwerkzeug enthaltene Sauerstoff entfernt, so dass keine Gefahr einer Selbstentzündung beim Einfüllen des Polysulfids in das Formwerkzeug besteht. Zusätzlich oder alternativ ist es auch möglich zur Entfernung der Luft und damit des Sauerstoffs aus dem Formwerkzeug einen Unterdruck anzulegen. Vorzugsweise wird hierzu vor dem Einbringen des Polysulfids ein Druck von weniger als 100 mbar(abs) an das Formwerkzeug angelegt. Das Anlegen eines Unterdrucks hat dabei den zusätzlichen Vorteil, dass hierdurch der Transport des Polysulfids in das Formwerkzeug unterstützt wird und insbesondere auch ein vollständiges Füllen des Formwerkzeugs ermöglicht wird, da weniger Druck erforderlich ist, mit dem das Polysulfid in das Formwerkzeug eingebracht wird, um das im Formwerkzeug enthaltene Gas zu komprimieren. Besonders bevorzugt ist der Unterdruck, der an das Formwerkzeug angelegt wird kleiner als 80 mbar(abs) und insbesondere kleiner als 60 mbar(abs).

Um zu verhindern, dass das Polysulfid während des Einbringens in das Formwerkzeug an der Wandung des Formwerkzeugs erstarrt, erstarrtes Polysulfid mit der Schmelze mittransportiert wird, wodurch das poröse Material geschädigt werden kann und so fehlerhafte Formteile hergestellt werden, ist es bevorzugt, wenn das Formwerkzeug eine Temperatur im Bereich von 150 bis 350°C aufweist. Eine solche Temperatur ist ausreichend, um zu verhindern, dass Polysulfid während des Einbringens in das Formwerkzeug erstarrt. Wenn zur Herstellung des mit Polysulfid getränkten porösen Materials beispielsweise eine Gusskokille eingesetzt wird, ist es möglich, diese auf eine Temperatur oberhalb der Schmelztemperatur des Polysulfids zu erwärmen und nach der Befüllung abzukühlen.

Nach dem Einbringen des Polysulfids wird dieses auf eine Temperatur unterhalb der Schmelztemperatur abgekühlt. Um Schwindung zu vermeiden und so Formteile herzustellen, die den gewünschten geometrischen Erfordernissen entsprechen, ist es bevorzugt, wenn während des Abkühlens Polysulfid in das Formwerkzeug nachgedrückt wird. Damit das Polysulfid im Formwerkzeug erstarren kann, ist es erforderlich, dass die Temperatur des Formwerkzeugs unterhalb der Schmelztemperatur des Polysulfids liegt. Andererseits ist es jedoch auch notwendig, dass die Temperatur des Formwerkzeugs nicht zu niedrig ist, damit das Polysulfid nicht zu schnell erstarrt, wodurch ein Nachdrücken zur Sicherstellung der Formhaltigkeit des Formteils erschwert oder verhindert würde oder eine Schädigung des porösen Materials herbeiführen könnte. Auch für das Nachdrücken zur Erzielung der gewünschten Formhaltigkeit ist es vorteilhaft, wenn das Formwerkzeug eine Temperatur im Bereich von 150 bis 350°C aufweist.

Als Temperatur des Formwerkzeugs wird hierbei die Temperatur an den Flächen verstanden, die mit dem Polysulfid in Kontakt kommen. Zur Temperierung des Formwerkzeugs ist es zum Beispiel möglich, eine elektrische Heizung vorzusehen oder alternativ Kanäle im Formwerkzeug auszubilden, die von einem Temperiermedium, beispielsweise Dampf oder einem Thermalöl durchströmt werden.

Um sowohl ein zu schnelles Erstarren während des Einbringens des Polysulfids in das Formwerkzeug zu vermeiden als auch ein Nachdrücken zur Formhaltigkeit ermöglichen zu können, ist es bevorzugt, wenn die Temperatur des Formwerkzeugs, das heißt der mit dem Polysulfid in Kontakt kommenden Oberflächen des Formwerkzeugs, im Bereich von 150 bis 350°C, mehr bevorzugt im Bereich von 150 bis 250 °C und insbesondere im Bereich von 170 bis 230 °C liegt.

Um zu verhindern, dass das hergestellte Formteil aus mit Polysulfid getränktem porösen Material nach Entnahme aus dem Formwerkzeug noch verformt werden kann, ist es vorteilhaft, wenn das gesamte in das Formwerkzeug eingebrachte Polysulfid erstarrt ist, bevor das Formwerkzeug zur Entnahme des Formteils geöffnet wird. Dies wird dadurch erreicht, dass nach dem Einbringen des Polysulfids das Formwerkzeug noch 10 bis 300 s, bevorzugt 30 bis 180 s, insbesondere 60 bis 120 s geschlossen bleibt. Diese Zeit ist dabei insbesondere abhängig von der Temperatur des Formwerkzeugs, der Temperatur der Schmelze und der Größe des hergestellten Formteils aus mit Polysulfid getränktem porösem Material. Je höher die Temperatur des Formwerkzeugs und je größer das Formteil ist, umso länger muss das Formteil nach Beendigung des Einbringens des Polysulfids in das Formwerkzeug im Formwerkzeug verbleiben, bevor das Formwerkzeug geöffnet werden kann, um das Formteil zu entnehmen.

Da aufgrund der möglichen Selbstentzündung des Polysulfids verhindert werden muss, dass dieses in geschmolzenem Zustand mit Sauerstoff in Kontakt kommt, wird das Polysulfid vorzugsweise in fester Form in einen Vorratsbehälter eingebracht. Dieser wird nach dem Befüllen mit dem Polysulfid inertisiert, zum Beispiel indem dieser mit einem Inertgas gespült wird. Als Inertgase können dabei die gleichen Gase eingesetzt werden, wie vorstehend zum Spülen des Formwerkzeugs beschrieben. Für die Inertisierung des Vorratsbehälters ist Argon bevorzugt. Alternativ oder zusätzlich ist es auch möglich, den Vorratsbehälter nach dem Einfüllen des Polysulfids und dem Verschließen zu evakuieren. Nach dem Inertisieren wird der Vorratsbehälter auf eine Temperatur oberhalb der Schmelztemperatur des Polysulfids erwärmt, so dass das Polysulfid im Vorratsbehälter schmilzt. Wenn das Polysulfid Natriumpolysulfid ist, wie es üblicherweise in elektrochemischen Zellen, die auf Basis von Natrium als Anodenmaterial und Schwefel als Kathodenmaterial arbeiten, eingesetzt wird, wird der Vorratsbehälter auf eine Temperatur von mehr als 285°C, vorzugsweise auf eine Temperatur von 285 bis 350°C erwärmt, so dass das Polysulfid nach dem Schmelzen ebenfalls eine Temperatur im Bereich von 285 bis 350°C aufweist. Um das Schmelzen des Polysulfids zu beschleunigen ist es vorteilhaft, wenn die Temperatur während des Aufschmelzens höher als 285°C ist. Je größer die Temperaturdifferenz zwischen der Schmelztemperatur des Polysulfids und der Temperatur des Vorratsbehälters, umso größer ist der zugeführte Wärmestrom, der zum Schmelzen des Polysulfids genutzt werden kann.

Der Vorratsbehälter wird dann über eine geeignete Verbindungsleitung mit dem Formwerkzeug verbunden. Bevor die Verbindung vom Vorratsbehälter in die Verbindungsleitung geöffnet wird, zum Beispiel durch ein Ventil am Auslass des Vorratsbehälters, ist es vorteilhaft, die Verbindungsleitung zu inertisieren, beispielsweise wie vorstehend beschrieben durch Spülen mit einem Inertgas und/oder durch Evakuieren. Bei einem solchen Aufbau, bei dem der Vorratsbehälter über eine Verbindungsleitung mit dem Formwerkzeug verbunden wird, besteht die Möglichkeit, auf einfache Weise den Vorratsbehälter zu wechseln, wenn das Polysulfid aufgebraucht ist. In diesem Fall kann das Polysulfid in einem nicht mit dem Formwerkzeug verbundenen Vorratsbehälter geschmolzen werden und es wird ein mit geschmolzenem Polysulfid befüllter Vorratsbehälter an die Verbindungsleitung angeschlossen. Dies erlaubt die Herstellung der Formteile aus mit Polysulfid gefülltem porösem Material ohne lange Unterbrechungen, die erforderlich wären, wenn jeweils nach Aufbrauchen des Polysulfids neues Polysulfid in den Vorratsbehälter eingebracht werden muss, dieser inertisiert werden muss und das Polysulfid anschließend geschmolzen wird. Alternativ ist es auch möglich, regelmäßig Polysulfid in den Vorratsbehälter nachzufüllen oder einen inertisierten Behälter vorzusehen, in dem festes Polysulfid vorgelegt wird und diesen mit einer Dosiereinrichtung, beispielsweise einer Zellradschleuse mit dem Vorratsbehälter für das geschmolzene Polysulfid zu verbinden und so entweder bei Erreichen einer unteren Füllmenge oder alternativ auch kontinuierlich festes Polysulfid in den Vorratsbehälter für das flüssige Polysulfid nachzudosieren, wobei das feste Polysulfid im Vorratsbehälter im dort bereits enthaltenen flüssigen Polysulfid geschmolzen wird.

Bei der Möglichkeit, den Vorratsbehälter zu wechseln ist es vorteilhaft, Polysulfid in der Verbindungsleitung zu belassen. Dies erlaubt die Fortsetzung des Betriebs ohne ein erneutes Inertisieren der Verbindungsleitung nach dem Wechsel des Vorratsbehälters. Da wegen der Gefahr der Selbstentzündung in diesem Fall die Verbindungsleitung an ihren Enden verschlossen werden muss, ist es dann nur erforderlich, den Teil zwischen dem Ventil am Auslass des Vorratsbehälters und dem Ventil an der Verbindungsleitung auf der Seite, mit der die Verbindungsleitung an den Vorratsbehälter angeschlossen wird, zu inertisieren. Um zu verhindern, dass das Polysulfid in der Verbindungsleitung erstarren kann, ist es bevorzugt, diese mit einer Begleitheizung, zum Beispiel einem Heizdraht oder einem Doppelmantel, der von einem Temperiermedium durchströmt wird, zu versehen. Zusätzlich ist es auch zur Vermeidung von Verbrennungen erforderlich, die Verbindungsleitung zu isolieren.

Das Polysulfid wird als Schmelze in das Formwerkzeug eingebracht. So liegt die Schmelztemperatur zum Beispiel bei Einsatz von Natriumpolysulfid im Bereich von 235 bis 285°C. Die Temperatur, mit der das Natriumpolysulfid in das Formwerkzeug eingebracht wird, liegt vorzugsweise im Bereich von 285 bis 350°C und insbesondere im Bereich von 300 bis 330°C.

Da das Polysulfid während des Erstarrens schwindet, ist es notwendig, während des Abkühlens weiteres Polysulfid in das Formwerkzeug nachzudrücken. Dies muss mit einem so großen Druck erfolgen, dass auch an den vom Einspritzpunkt entfernten Stellen des Formteils Polysulfid nachgeführt wird, mit dem die Schwindung ausgeglichen wird. Dies erlaubt die Herstellung formtreuer Formteile. Dies ist insbesondere notwendig, um die elektrochemische Zelle auf einfache Weise montieren zu können. Da auch beim Nachdrücken verhindert werden muss, dass sich das poröse Material verformt, wird das Polysulfid nach dem Befüllen des Formwerkzeugs vorzugsweise mit einem Druck im Bereich von 150 bis 200 bar nachgedrückt. Ein solcher Druck erlaubt es, formtreue Formteile herzustellen ohne dass das poröse Material verformt wird.

Um das Polysulfid in das Formwerkzeug einzubringen können unterschiedliche Gießverfahren eingesetzt werden. Bevorzugt wird zum Einbringen des Polysulfids in das Formwerkzeug ein Kaltkammerverfahren, ein Warmkammerverfahren oder ein Vakuum-Gießverfahren eingesetzt.

Beim Kaltkammerverfahren wird das Polysulfid in einem Ofen erwärmt und geschmolzen, aus dem Ofen in eine Fördereinheit, mit der ein Druck im Formwerkzeug aufgebaut werden kann, gefördert und mit der Fördereinheit in das Formwerkzeug gedrückt. Im Unterschied dazu ist beim Warmkammerverfahren die Fördereinheit, mit der das Polysulfid in das Formwerkzeug gedrückt wird, Teil des Ofens. Als Fördereinheit, mit der Druck im Formwerkzeug aufgebaut werden kann, wird insbesondere eine Kolbeneinheit eingesetzt. Eine solche Kolbeneinheit umfasst einen Kompressionsraum, in den das Polysulfid aus dem Vorratsbehälter oder dem Ofen einströmt und einen Kolben, mit dem das Polysulfid in einem nächsten Schritt aus dem Kompressionsraum in das Formwerkzeug gepresst wird. Alternativ zu einer solchen Kolbeneinheit kann jedoch auch jede weitere geeignete Fördereinheit eingesetzt werden, beispielsweise eine Pumpe oder auch eine Schneckenkolbenmaschine. Besonders bevorzugt ist jedoch eine Kolbeneinheit.

Beim Vakuum-Gießverfahren wird im Unterschied zum Kaltkammerverfahren und Warmkammerverfahren das Polysulfid nicht mit einer Fördereinheit in das Formwerkzeug gedrückt, sondern es wird ein Unterdruck am Formwerkzeug angelegt und das geschmolzene Polysulfid strömt aufgrund des am Formwerkzeug angelegten Unterdrucks in das Formwerkzeug.

Besonders bevorzugt ist es, das Vakuum-Druckgießverfahren mit dem Warmkammerverfahren oder dem Kaltkammerverfahren zu kombinieren. Durch das Anlegen des Unterdrucks wird insbesondere verhindert, dass Gas in das Formteil eigeschlossen werden kann, was zu einer unvollständigen Tränkung des porösen Materials führt, oder durch Gas im Formwerkzeug Verformungen an der Oberfläche durch Gasblasen im Formwerkzeug entstehen, da das Gas vor dem Einbringen des Polysulfids aus dem Formwerkzeug entfernt wird. Hierbei kann zum Beispiel zunächst Polysulfid nur aufgrund des angelegten Unterdrucks in das Formwerkzeug eingebracht werden und die Fördereinheit wird nur zum Nachdrücken eingesetzt oder aber es wird von Beginn an mit Unterstützung durch die Fördereinheit das Polysulfid in das Formwerkzeug gedrückt. Es ist in jedem Fall jedoch darauf zu achten, dass die Fließgeschwindigkeit des Polysulfids im porösen Material im Bereich von 0,5 bis 200 cm/s, bevorzugt im Bereich von 0,5 bis 50 cm/s und insbesondere im Bereich von 1 bis 10 cm/s liegt.

Das Formteil aus mit Polysulfid getränktem porösem Material ist insbesondere eine Elektrode oder ein Teil einer Elektrode für eine elektrochemische Zelle oder auch ein Speicherelement für den Einsatz in einer elektrochemischen Zelle, insbesondere für eine Natrium-Schwefel-Batterie.

Eine elektrochemische Zelle, in der die Formteile aus mit Polysulfid getränktem porösem Material eingesetzt werden können, umfasst in der Regel einen Kathodenraum zur Aufnahme eines flüssigen Kathodenmaterials und einen Anodenraum zur Aufnahme eines flüssigen Anodenmaterials, wobei der Kathodenraum und der Anodenraum durch einen Festelektrolyten getrennt sind und der Festelektrolyt von einem Flächengebilde mit Öffnungen umschlossen ist, die von dem Kathodenmaterial durchströmbar sind. Das Flächengebilde ist aus einem elektrisch leitenden Material gefertigt und der Kathodenraum umfasst mindestens ein Segment, wobei jedes Segment einen Mantel aus einem elektrisch leitfähigen Material aufweist und der Mantel elektrisch leitend am Flächengebilde mit Öffnungen befestigt ist. Wenn der Kathodenraum mehr als ein Segment umfasst, ist zudem eine fluiddichte Verbindung des Mantels mit dem Flächengebilde mit Öffnungen erforderlich. Die Segmente dienen jeweils als Speicher für das Kathodenmaterial und zur Vergrößerung der Speicherkapazität der elektrochemischen Zelle kann entweder die Anzahl der Segmente oder die Querschnittsfläche und damit das Volumen der Segmente vergrößert werden. Um das Kathodenmaterial gleichmäßig zum Festelektrolyten zu führen und das am Festelektrolyten gebildete Reaktionsprodukt aus Anodenmaterial und Kathodenmaterial vom Festelektrolyten wegzuleiten wird in die Segmente ein poröses Material eingelegt. Durch Kapillarkräfte in den Poren des porösen Materials wird der Transport des Kathodenmaterials beziehungsweise des Reaktionsproduktes unterstützt. Um bei der Herstellung der elektrochemischen Zelle den Umgang mit den reaktiven Edukten, insbesondere dem als Anodenmaterial eingesetzten hochreaktiven Alkalimetall zu vermeiden, wird das poröse Material mit dem Polysulfid getränkt und dann als Formteil aus mit Polysulfid getränktem porösem Material in die Segmente eingesetzt. Eine entsprechende elektrochemische Zelle und deren Herstellung sind zum Beispiel in der WO-A 2017/102697 beschrieben. Durch den Einsatz der Formteile aus mit Polysulfid getränktem porösem Material anstelle einer Befüllung mit Kathodenmaterial und Anodenmaterial ist die elektrochemische Zelle nach dem Zusammenbau in entladenem Zustand. Um die elektrochemische Zelle einsetzen zu können ist es daher zunächst notwendig, diese zu laden. Hierzu wird die elektrochemische Zelle zunächst erwärmt, so dass das Polysulfid schmilzt. Anschließend wird an die elektrochemische Zelle ein elektrischer Strom angelegt, wodurch das Polysulfid am Festelektrolyten in Kathodenmaterial und Anodenmaterial gespalten wird. Das Anodenmaterial durchdringt den Festelektrolyten und wird im Anodenraum gesammelt. Das Kathodenmaterial verbleibt im porösen Material im Kathodenraum.

Alternativ oder zusätzlich ist es auch möglich, eine Elektrode aus einem porösen Material vorzusehen, wobei diese Elektrode auf der dem Kathodenraum zugewandten Seite des Festelektrolyten angeordnet ist. Die Elektrode aus porösem Material umschließt dabei vorzugsweise den Festelektrolyten.

Bei Verwendung des Formteils aus mit Polysulfid getränktem porösem Material in einer elektrochemischen Zelle ist es besonders bevorzugt, ein Alkalimetallpolysulfid als Polysulfid zu verwenden. Besonders bevorzugt ist das Alkalimetallpolysulfid Natriumpolysulfid.

Abhängig von der Funktion des Formteils aus mit Polysulfid getränktem porösem Material wird das Material für das poröse Material ausgewählt. Wenn das poröse Material als poröse Elektrode in der elektrochemischen Zelle eingesetzt werden soll, wird für das poröse Material ein chemisch inertes und elektrisch leitendes Material eingesetzt, das sowohl von Schwefel als auch von Polysulfid benetzt werden kann. In diesem Fall ist das poröse Material vorzugsweise aus Kohlenstoff, insbesondere in Form von Graphit, aufgebaut.

Zur Verbesserung des Stofftransportes in der porösen Elektrode ist es möglich, zusätzlich zu dem chemisch inerten und elektrisch leitenden Material, das vom Kathodenmaterial benetzt werden kann, ein zweites von dem Reaktionsprodukt aus Kathodenmaterial und Anodenmaterial gut benetzbares Material vorzusehen, wobei dieses nicht zwingend elektrisch leitend sein muss. Als vom Reaktionsprodukt aus Kathodenmaterial und Anodenmaterial gut benetzbares Material eignen sich insbesondere Oxidkeramiken oder Gläser wie Aluminiumoxid (Al₂O₃), Siliziumdioxid, beispielsweise Glasfasern, Mischoxide des Aluminiums mit Silizium, Silikaten und Alumosilikaten sowie Zirkonoxid und Mischungen dieser Materialien. Wenn zusätzlich ein vom Reaktionsprodukt aus Anodenmaterial und Kathodenmaterial gut benetzbares Material enthalten ist, so liegt der Anteil an dem vom Reaktionsprodukt aus Kathodenmaterial und Anodenmaterial gut benetzbaren Material in der Elektrode vorzugsweise bei weniger als 50 Vol.-%, besonders bevorzugt weniger als 40 Vol.-% und mindestens bei 5 Vol.-%. Darüber hinaus ist es möglich, die Elektrode durch eine thermische Behandlung für das Reaktionsprodukt aus Anoden- und Kathodenmaterial benetzbar zu machen. Eine thermische Behandlung kann beispielsweise bei 600 °C in Luftatmosphäre für 20 bis 240 Minuten erfolgen.

Bei Einsatz des Formteils aus mit Polysulfid getränkten porösen Materials als Speichermaterial im Kathodenraum ist das poröse Material vorzugsweise aus einem Material gefertigt, das von dem Kathodenmaterial und dem Reaktionsprodukt aus Kathodenmaterial und Anodenmaterial gut benetzbar ist. Um auch bei unterschiedlichen Benetzungseigenschaften von Kathodenmaterial und Reaktionsprodukt eine gute Benetzung des porösen Materials zu erhalten, ist es vorteilhaft, das poröse Material aus unterschiedlichen Materialien zu fertigen, wobei ein Teil des Materials gut vom Kathodenmaterial benetzbar ist und ein Teil gut vom Anodenmaterial. Bei Einsatz einer Mischung aus mehreren verschiedenen Materialien für das poröse Material werden diese vorzugsweise jeweils in gleichem Volumenanteil eingesetzt. Je nach Auslegung der elektrochemischen Zelle können jedoch auch andere Volumenverhältnisse eingestellt werden. Bei Einsatz eines Alkalimetalls als Anodenmaterial und Schwefel als Kathodenmaterial eignen sich als Material, aus dem das poröse Material aufgebaut ist, insbesondere thermisch stabilisierte Polymerfasern, Fasern aus Oxidkeramik oder Glasfasern, bevorzugt thermisch stabilisierte Polymerfasern in Mischung mit Fasern aus Oxidkeramiken oder Glasfasern. Als Fasern aus Oxidkeramiken oder Glasfasern eignen sich insbesondere Fasern aus Aluminiumoxid (Al₂O₃), Siliziumdioxid, beispielsweise Glasfasern, Mischoxide des Aluminiums mit Silizium, Silikaten oder Alumosilikaten, Zirkonoxid oder Mischungen dieser Materialien. Geeignete thermisch stabilisierte Polymerfasern sind zum Beispiel oxidierte, thermisch stabilisierte Polyacrylnitril-(PAN)-Fasern, die beispielsweise unter der Bezeichnung PANOX^{®} kommerziell verfügbar sind. Um solche Fasern gegenüber Temperaturen von mehr als 300 °C beständiger zu machen, ist es vorteilhaft, die Polymerfasern gemischt mit den Oxidkeramikfasern oder Glasfasern beispielsweise für 12 bis 36 Stunden bei Temperaturen im Bereich von 400 bis 500 °C in einer inerten Atmosphäre, beispielsweise Stickstoff oder Edelgas wie Argon, nachzubehandeln.

Damit mit dem porösen Material bei Einsatz in einer elektrochemischen Zelle, insbesondere einer Natrium-Schwefel-Batterie, ein gleichmäßiger Transport von Kathodenmaterial und Reaktionsprodukt aus Kathodenmaterial und Anodenmaterial zur Elektrode hin und von der Elektrode weg sichergestellt werden kann, ist das poröse Material vorzugsweise ein Filz, ein Gewebe, ein Gestrick, ein Gewirk, ein Geflecht, ein Vlies, ein offenporiger Schaum oder ein dreidimensionales Netz. Wenn das poröse Material ein Filz ist, wird diesem für eine Verbesserung des Massentransports im Betrieb der elektrochemischen Zelle eine Vorzugsrichtung gegeben. Die Vorzugsrichtung kann dabei insbesondere durch Vernadeln erzeugt werden. Die Vorzugsrichtung verläuft dabei vorzugsweise nach Montage der elektrochemischen Zelle senkrecht zum Festelektrolyten. Alternativ oder zusätzlich ist es möglich zur Verbesserung des Massentransports kanalartige Strukturen vorzusehen. Diese verlaufen bei montierter elektrochemischer Zelle ebenfalls vorzugsweise senkrecht zum Festelektrolyten.

Um bei einem porösen Material mit Vorzugsrichtung bei der Herstellung des Formteils aus Polysulfid und porösem Material die Vorzugsrichtung auszunutzen und das Tränken mit dem Polysulfid zu erleichtern, ist es vorteilhaft, wenn der Anspritzpunkt, über den das Polysulfid in das Formwerkzeug eingebracht wird, so angeordnet ist, dass das Polysulfid beim Einbringen in das Formwerkzeug entlang der Vorzugsrichtung im porösen Material strömt. Hierdurch wird insbesondere ein Verformen des porösen Materials während des Einbringens des Polysulfids in das Formwerkzeug weiter reduziert oder verhindert.

Nach dem Einbringen des Polysulfids wird dieses soweit abgekühlt, dass das Polysulfid erstarrt. Hierdurch wird das Formteil aus mit Polysulfid getränktem porösem Material gebildet. Durch das erstarrte Polysulfid ist das Formteil auch formstabil, so dass sich dieses nicht verformen lässt und auf diese Weise einfach in der Herstellung der elektrochemischen Zelle eingesetzt werden kann. Eine Verformung des porösen Materials ist erst dann wieder auf einfache Weise möglich, wenn das Polysulfid erneut geschmolzen ist. Ein weiterer Vorteil der Herstellung aus mit Polysulfid getränktem porösem Material ist, dass das Formteil sicher handhabbar ist, da das Polysulfid nur in geschmolzenem Zustand zur Selbstentzündung neigt, eine solche Selbstentzündung aber auch in Gegenwart von Sauerstoff nicht erfolgt, wenn das Polysulfid in fester Form ist.

Zur sicheren Herstellung von mehreren Formteilen aus mit Polysulfid getränktem porösem Material ist es daher erforderlich, nach dem Öffnen des Formwerkzeugs und dem Entnehmen des Formteils nach erneutem Schließen vor dem Einbringen des Polysulfids das Formwerkzeug wieder zu inertisieren. Solange das Formwerkzeug vor dem Einbringen des Polysulfids inertisiert wird, wie vorstehen beschrieben beispielsweise durch Spülen mit einem Inertgas oder alternativ oder zusätzlich durch Anlegen eines Unterdrucks, lässt sich das Verfahren auch für die Herstellung mehrerer Formteile sicher betreiben.

Neben dem Einsatz von Formwerkzeugen mit nur einer Form zur Herstellung eines Formteils ist es auch möglich, Formwerkzeuge mit mehreren Formen einzusetzen, die jeweils durch Fließkanäle untereinander verbunden sind oder über einen Verteiler mit einem zentralen Zulauf für das Polysulfid, um auf diese Weise in einem Formwerkzeug mehrere Formteile aus mit Polysulfid getränktem porösem Material gleichzeitig herstellen zu können. Bevorzugt ist in diesem Fall, die einzelnen Formen des Formwerkzeugs über einen Verteiler mit einem zentralen Zulauf zu verbinden, so dass die einzelnen Formen über den Verteiler gleichzeitig mit dem durch den zentralen Zulauf eingebrachten Polysulfid befüllt werden.

## Patentansprüche

1. Verfahren zur Herstellung von Formteilen aus mit Polysulfid getränktem porösem Material, umfassend folgende Schritte:
(a) Einlegen des porösen Materials in ein Formwerkzeug;
(b) Einbringen von flüssigem Polysulfid in das Formwerkzeug mit einer Fließgeschwindigkeit im porösen Material im Bereich von 0,5 bis 200 cm/s;
(c) Abkühlen des Polysulfids auf eine Temperatur unterhalb der Schmelztemperatur des Polysulfids;
(d) Entnehmen des mit dem Polysulfid getränkten porösen Materials.

2. Verfahren gemäß Anspruch 1, **dadurch gekennzeichnet, dass** das Formwerkzeug nach dem Einlegen des porösen Materials mit einem Inertgas gespült wird.

3. Verfahren gemäß Anspruch 1 oder 2, **dadurch gekennzeichnet, dass** vor dem Einbringen des Polysulfids ein Druck von weniger als 100 mbar(abs) an das Formwerkzeug angelegt wird.

4. Verfahren gemäß einem der Ansprüche 1 bis 3, **dadurch gekennzeichnet, dass** das Formwerkzeug eine Temperatur im Bereich von 150 bis 350°C aufweist.

5. Verfahren gemäß einem der Ansprüche 1 bis 4, **dadurch gekennzeichnet, dass** das Polysulfid mit einer Temperatur im Bereich von 285 bis 350°C in das Formwerkzeug eingebracht wird.

6. Verfahren gemäß einem der Ansprüche 1 bis 5, **dadurch gekennzeichnet, dass** das Polysulfid nach dem Befüllen des Formwerkzeugs mit einem Druck im Bereich von 150 bis 200 bar nachgedrückt wird.

7. Verfahren gemäß einem der Ansprüche 1 bis 6, **dadurch gekennzeichnet, dass** zum Einbringen des Polysulfids in das Formwerkzeug ein Kaltkammerverfahren, ein Warmkammerverfahren oder ein Vakuum-Gießverfahren eingesetzt wird.

8. Verfahren gemäß einem der Ansprüche 1 bis 7, **dadurch gekennzeichnet, dass** das Polysulfid ein Alkalimetallpolysulfid ist.

9. Verfahren gemäß Anspruch 8, **dadurch gekennzeichnet, dass** das Polysulfid Natriumpolysulfid ist.

10. Verfahren gemäß einem der Ansprüche 1 bis 9, **dadurch gekennzeichnet, dass** das poröse Material ein Filz, ein Gewebe, ein Gestrick, ein Gewirk, ein Geflecht, ein Vlies, ein offenporiger Schaum oder ein dreidimensionales Netz ist.

11. Verfahren gemäß einem der Ansprüche 1 bis 10, **dadurch gekennzeichnet, dass** das poröse Material aus Graphit, thermisch stabilisierten Polymerfasern, Fasern aus Oxidkeramik, Glasfasern oder Mischungen daraus aufgebaut ist.

12. Verfahren gemäß einem der Ansprüche 1 bis 11, **dadurch gekennzeichnet, dass** das Formteil eine Elektrode oder ein Teil einer Elektrode für eine elektrochemische Zelle ist.

13. Verfahren gemäß einem der Ansprüche 1 bis 12, **dadurch gekennzeichnet, dass** das Formteil ein Speicherelement für den Einsatz in einer elektrochemischen Zelle ist.

14. Verfahren gemäß Anspruch 12 oder 13, **dadurch gekennzeichnet, dass** die elektrochemische Zelle eine Natrium-Schwefel-Batterie ist.

## Claims

1. A process for the production of moldings made of porous material impregnated with polysulfide, comprising the following steps:
(a) insertion of the porous material into a mold;
(b) introduction of liquid polysulfide into the mold at a flow rate within the porous material in the range from 0.5 to 200 cm/s;
(c) cooling of the polysulfide to a temperature below the melting point of the polysulfide;
(d) removal of the porous material impregnated with the polysulfide.

2. The process according to claim 1, wherein after the insertion of the porous material the mold is flushed with an inert gas.

3. The process according to claim 1 or 2, wherein, before the introduction of the polysulfide, a pressure below 100 mbar (abs) is applied to the mold.

4. The process according to any of claims 1 to 3, wherein the temperature of the mold is in the range from 150 to 350°C.

5. The process according to any of claims 1 to 4, wherein the temperature of the polysulfide when it is introduced into the mold is in the range from 285 to 350°C.

6. The process according to any of claims 1 to 5, wherein, after the material has been introduced into the mold, a pressure in the range from 150 to 200 bar is used to introduce further polysulfide.

7. The process according to any of claims 1 to 6, wherein introduction of the polysulfide into the mold is achieved by using a cold-chamber process, a hot-chamber process or a vacuum casting process.

8. The process according to any of claims 1 to 7, wherein the polysulfide is an alkali metal polysulfide.

9. The process according to claim 8, wherein the polysulfide is sodium polysulfide.

10. The process according to any of claims 1 to 9, wherein the porous material is a felt, a woven fabric, a knitted fabric, a braided fabric, a nonwoven fabric, an open-pore foam or a three-dimensional network.

11. The process according to any of claims 1 to 10, wherein the porous material is composed of graphite, of heat-stabilized polymer fibers, of fibers made of oxide ceramic, of glass fibers or of a mixture thereof.

12. The process according to any of claims 1 to 11, wherein the molding is an electrode or a part of an electrode for an electrochemical cell.

13. The process according to any of claims 1 to 12, wherein the molding is a storage element for use in an electrochemical cell.

14. The process according to claim 12 or 13, wherein the electrochemical cell is a sodium-sulfur battery.

## Revendications

1. Procédé pour la fabrication de pièces moulées à partir de matériau poreux imprégné avec du polysulfure, comprenant les étapes suivantes :
(a) introduction du matériau poreux dans un outil de moulage ;
(b) introduction de polysulfure liquide dans l'outil de moulage à une vitesse d'écoulement dans le matériau poreux dans la plage de 0,5 à 200 cm/s ;
(c) refroidissement du polysulfure jusqu'à une température au-dessous de la température de fusion du polysulfure ;
(d) enlèvement du matériau poreux imprégné avec le polysulfure.

2. Procédé selon la revendication 1, **caractérisé en ce qu'**après l'introduction du matériau poreux on rince avec un gaz inerte l'outil de moulage.

3. Procédé selon la revendication 1 ou 2, **caractérisé en ce qu'**avant l'introduction du polysulfure on applique une pression de moins de 100 mbars(abs) sur l'outil de moulage.

4. Procédé selon l'une quelconque des revendications 1 à 3, **caractérisé en ce que** l'outil de moulage présente une température dans la plage de 150 à 350 °C.

5. Procédé selon l'une quelconque des revendications 1 à 4, **caractérisé en ce que** le polysulfure est introduit à une température dans la plage de 285 à 350 °C dans l'outil de moulage.

6. Procédé selon l'une quelconque des revendications 1 à 5, **caractérisé en ce qu'**après le remplissage de l'outil de moulage le polysulfure est maintenu sous une pression dans la plage de 150 à 200 bars.

7. Procédé selon l'une quelconque des revendications 1 à 6, **caractérisé en ce que** pour l'introduction du polysulfure dans l'outil de moulage on utilise un procédé à chambre froide, un procédé à chambre chaude ou un procédé de coulée sous vide.

8. Procédé selon l'une quelconque des revendications 1 à 7, **caractérisé en ce que** le polysulfure est un polysulfure de métal alcalin.

9. Procédé selon la revendication 8, **caractérisé en ce que** le polysulfure est le polysulfure de sodium.

10. Procédé selon l'une quelconque des revendications 1 à 9, **caractérisé en ce que** le matériau poreux est un feutre, un tissu, un tricot, un tissu à mailles, un treillis, un non-tissé, une mousse à pores ouverts ou un réseau tridimensionnel.

11. Procédé selon l'une quelconque des revendications 1 à 10, **caractérisé en ce que** le matériau polaire est constitué de graphite, de fibres polymères stabilisées thermiquement, de fibres de céramique d'oxydes, de fibres de verre ou de mélanges de ceux-ci.

12. Procédé selon l'une quelconque des revendications 1 à 11, **caractérisé en ce que** la pièce moulée est une électrode ou une partie d'une électrode pour une cellule électrochimique.

13. Procédé selon l'une quelconque des revendications 1 à 12, **caractérisé en ce que** la pièce moulée est un élément accumulateur pour l'utilisation dans une cellule électrochimique.

14. Procédé selon la revendication 12 ou 13, **caractérisé en ce que** la cellule électrochimique est une batterie sodium-soufre.
